# EUROPEAN PATENT APPLICATION

(11) **EP 3 842 672 A1**
(43) Date of publication of application: **30.06.2021**
(21) Application number: 20216259.0
(22) Date of filing: 22.12.2020
(51) Int. Cl.: F16J 15/3236, F16J 15/3256, F16H 57/02

(54) **COOLING TOWER SPEED REDUCER WITH OIL SEAL**

(30) Priority: 26.12.2019 JP 2019235413
(71) Applicant: Sumitomo Heavy Industries, Ltd., Tokyo 141-6025 (JP)
(72) Inventor: DE MUNCK, Thierry, B-2650 Edegem(Antwerp), (BE); WANG, Biao, B-2650 Edegem(Antwerp), (BE)
(74) Representative: Louis Pöhlau Lohrentz

(57) **Abstract**

To preferably seal a gap between a shaft and a casing (50) with a simple configuration. A cooling tower speed reducer (1) that reduces a speed of rotation input from an input shaft (20) to rotationally drive a cooling fan (140) installed inside a cooling tower (100) includes a seal member (25, 58) disposed between an output shaft (40) and a top cover (57). The seal member (25, 58) has a first member (581) externally fitted to the output shaft (40) and a second member (584) internally fitted to the top cover (57). The first member (581) has a first core bar (582) and a first lip portion (583a) provided on an outer periphery of the first core bar (582) . The second member (584) has a second core bar (585) with which the first lip portion (583a) comes into contact and second lip portions (586a to 586c) provided on an inner periphery of the second core bar (585) to come into contact with the first core bar (582).

## Description

### BACKGROUND OF THE INVENTION

### Field of the Invention

The present invention relates to a cooling tower speed reducer.

### Description of Related Art

In the related art, a cooling tower speed reducer is known which drives a cooling fan of a cooling tower (for example, refer to Japanese Unexamined Patent Publication No. 2004-263739) . In this type of speed reducers, a problem may arise in sealing performance between an externally exposed shaft (for example, an output shaft) and a casing in some cases. In particular, in a wet cooling tower that sprays water, the speed reducer is exposed to a high humidity atmosphere. Consequently, it is necessary to satisfactorily maintain the sealing performance between the shaft and the casing so that not only dust but also moisture does not enter an inside of the speed reducer.

### SUMMARY OF THE INVENTION

It is desirable to preferably seal a gap between a shaft and a casing with a simple configuration.

According to an embodiment of the present invention, there is provided a cooling tower speed reducer that reduces a speed of rotation input from an input shaft to rotationally drive a cooling fan installed inside a cooling tower.

The cooling tower speed reducer includes a seal member disposed between a shaft and a casing.

The seal member includes a first member externally fitted to the shaft and a second member internally fitted to the casing.

The first member includes a first member main body and a first lip portion provided on an outer periphery of the first member main body.

The second member includes a second member main body with which the first lip portion comes into contact, and second lip portions provided on an inner periphery of the second member main body to come into contact with the first member main body.

According to an embodiment of the present invention, it is possible to preferably seal a gap between a shaft and a casing with a simple configuration.

### BRIEF DESCRIPTION OF THE DRAWINGS

Fig. 1 is a sectional view illustrating a cooling tower to which a cooling tower speed reducer according to an embodiment of the present invention is applied.
Fig. 2A is a perspective view when the cooling tower speed reducer according to the embodiment is viewed from an obliquely upper front side, and Fig. 2B is a perspective view when the cooling tower speed reducer is viewed from an obliquely lower front side.
Fig. 3A is a side view of the cooling tower speed reducer according to the embodiment, and Fig. 3B is a perspective view when the cooling tower speed reducer is viewed from an obliquely lower rear side.
Fig. 4 is a side sectional view of the cooling tower speed reducer according to the embodiment.
Fig. 5 is an enlarged view of a section A in Fig. 4.
Fig. 6 is a view illustrating a seal structure between a shaft and a casing in the related art.

### DETAILED DESCRIPTION OF THE INVENTION

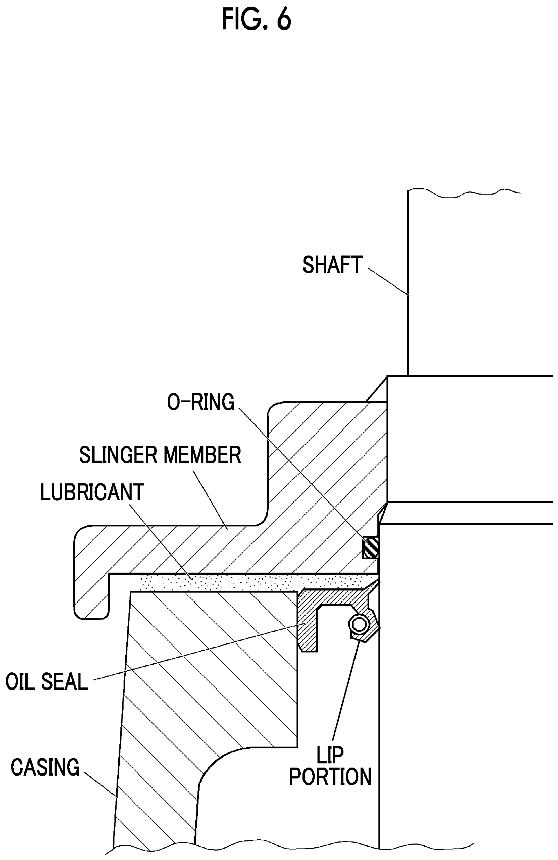

For example, as illustrated in Fig. 6, in some cases, a gap between a casing and a shaft is sealed with an oil seal, and a slinger member is provided in the shaft so that a gap between a seal portion and the slinger member is filled with a lubricant. In this manner, a speed reducer prevents oil from leaking out of the speed reducer or prevents external moisture from entering the speed reducer. However, according to this configuration, it is necessary to provide the slinger member. Consequently, the number of components increases, and the speed reducer has a complicated configuration.

Hereinafter, an embodiment of the present invention will be described in detail with reference to the drawings.

### [Configuration of Cooling Tower]

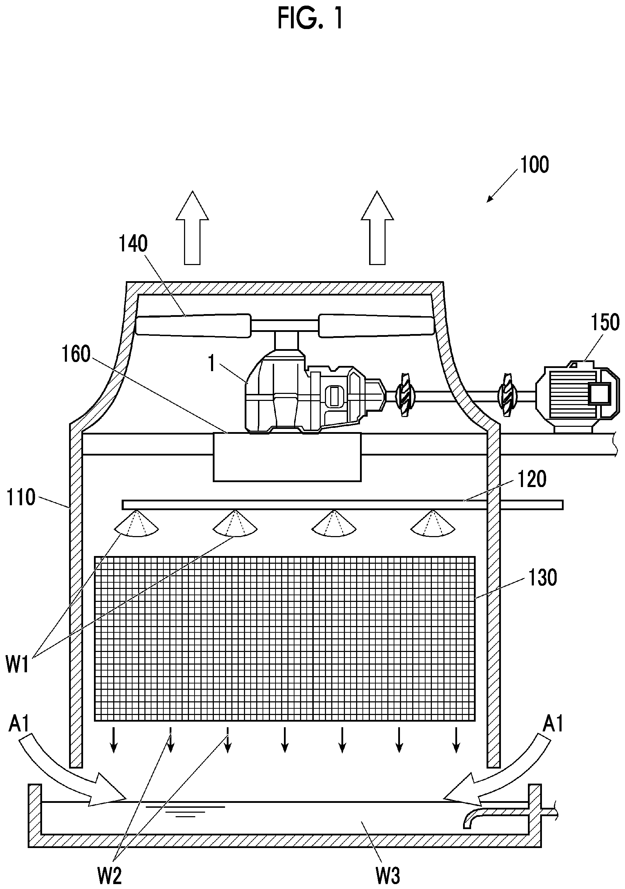

Fig. 1 is a sectional view illustrating a cooling tower 100 to which a cooling tower speed reducer 1 according to an embodiment of the present invention is applied.

As illustrated in the drawing, the cooling tower speed reducer (hereinafter, simply referred to as a "speed reducer") 1 according to the present embodiment is applied to the cooling tower 100.

The cooling tower 100 cools cooling water used in a cryocooler for air conditioning or a process fluid for refining crude oil. In the cooling tower 100, warmed cooling water W1 introduced into a tower unit 110 is sprayed onto a surface of a filler 130 by a sprinkler 120, and external air A1 fetched by a cooling fan 140 is blown to dropping water W2. In this manner, the water W2 is partially evaporated, the remaining water is cooled, and cooling water W3 collected in a bottom portion of the tower unit 110 is circulated to an air conditioner by a pump.

The cooling fan 140 is provided in an upper portion of the tower unit 110, and discharges moisture evaporated in the tower unit 110 to external air above. The cooling fan 140 is connected to a motor 150 via the speed reducer 1. The speed reducer 1 reduces a speed of power of the motor 150, and outputs the power to rotationally drive the cooling fan 140.

Various types of the cooling towers are present in addition to an open type illustrated in Fig. 1. The speed reducer 1 of the present embodiment can be used for any type of the cooling towers (for driving the cooling fan). For example, the speed reducer 1 can also be used for an air-cooled heat exchanger (air fin cooler) having a closed type, a suction ventilation type, or a force ventilation type.

### [Configuration of Speed Reducer]

Subsequently, a configuration of the speed reducer 1 will be described.

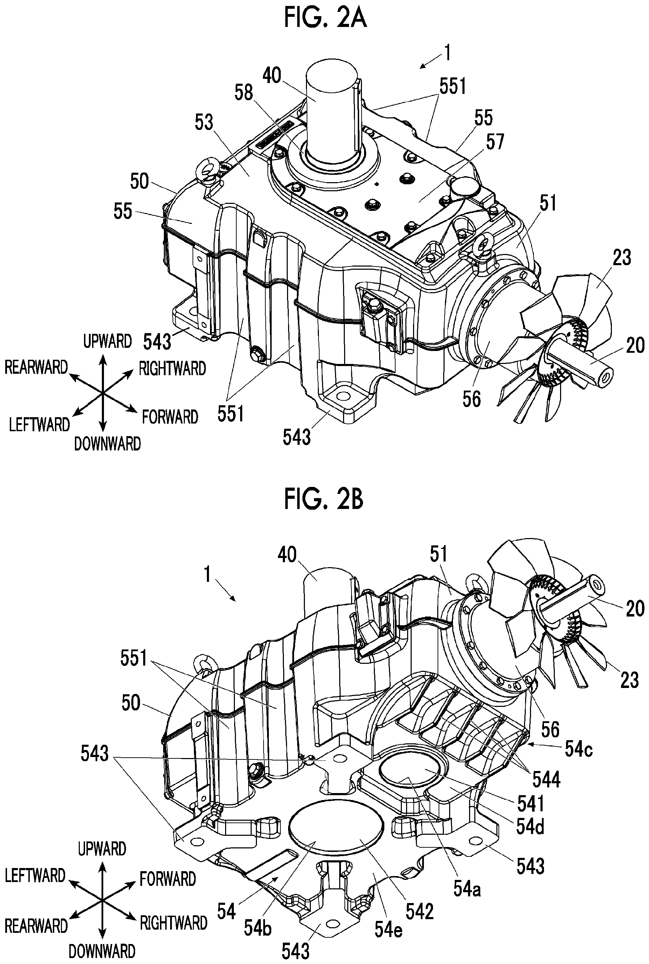

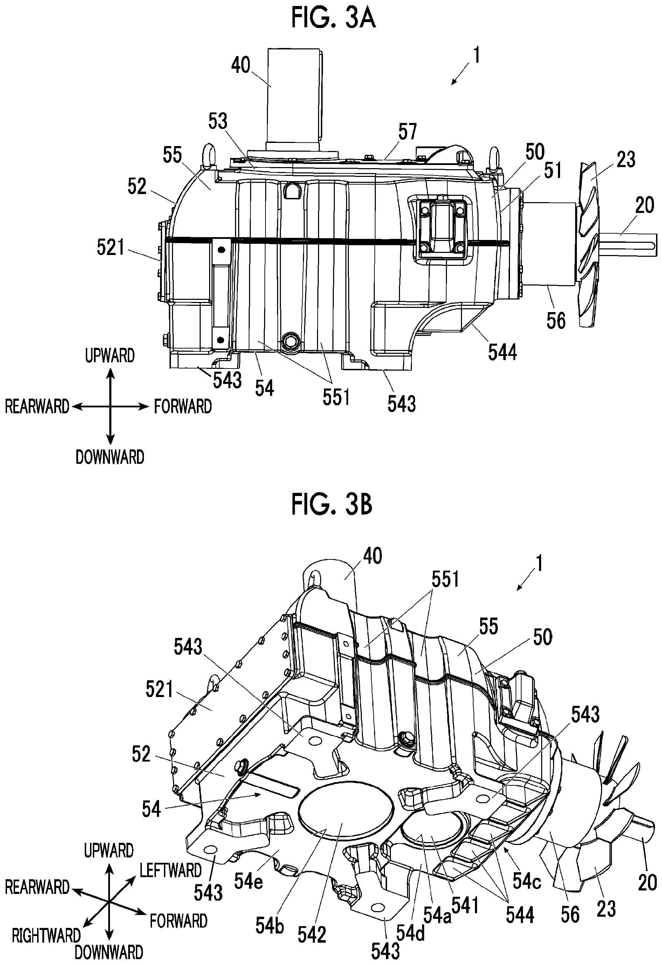

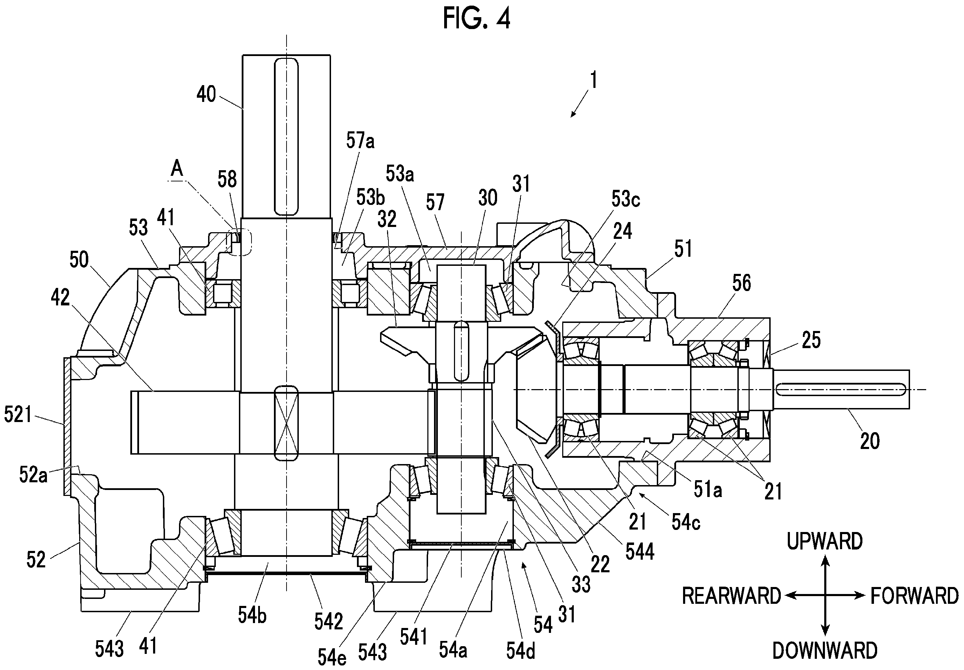

Figs. 2A and 2B are perspective views when the speed reducer 1 is viewed from an obliquely upper front side and an obliquely lower front side. Figs. 3A and 3B are side views of the speed reducer 1, and are perspective views when the speed reducer 1 is viewed from an obliquely lower rear side. Fig. 4 is a side sectional view of the speed reducer 1.

As illustrated in Figs. 2A to 4, the speed reducer 1 includes an input shaft 20, an intermediate shaft 30, and an output shaft 40 which are sequentially connected to transmit power, and a casing 50 that accommodates the shafts.

The input shaft 20 is disposed so that an axial direction is oriented in a substantially horizontal direction, and the intermediate shaft 30 and the output shaft 40 are disposed so that the respective axial directions are oriented in an upward-downward direction substantially perpendicular to the input shaft 20. The input shaft 20, the intermediate shaft 30, and the output shaft 40 are pivotally supported by bearings 21, 31, and 41 disposed between the respective shafts and the casing 50. In addition, the respective axes of the input shaft 20, the intermediate shaft 30, and the output shaft 40 are located in the mutually same plane.

In the following description, directions of the speed reducer 1 will be defined as follows. A direction along the input shaft 20 (rightward-leftward direction on a paper surface in Fig. 4) will be set as a "forward-rearward direction", a vertical direction perpendicular to the forward-rearward direction on the paper surface in Fig. 4 will be set as the "rightward-leftward direction", and a direction along the output shaft 40 (upward-downward direction on the paper surface in Fig. 4) will be set as the "upward-downward direction" . In addition, in the "forward-rearward direction", a side where the input shaft 20 is exposed from the casing 50 will be set as a "front side", and a side opposite thereto will be set as a "rear side".

A bevel pinion 22 is formed in a rear side tip of the input shaft 20. The bevel pinion 22 meshes with a bevel gear 32 connected to the intermediate shaft 30 to be integrally rotated. An intermediate gear 33 is formed on an outer peripheral surface of the intermediate shaft 30. The intermediate gear 33 meshes with an output gear 42 connected to the output shaft 40 to be integrally rotated.

A front side tip of the input shaft 20 is exposed from the casing 50, and a motor 150 (refer to Fig. 1) is connected to the tip to receive input power (rotating motion) . An upper end of the output shaft 40 is exposed from the casing 50, and is connected to the cooling fan 140 (refer to Fig. 1).

According to this configuration, a rotating motion input to the input shaft 20 is transmitted to the output shaft 40 while a speed of the rotational motion is reduced via a gear set of the bevel pinion 22 and the bevel gear 32 and a gear set of the intermediate gear 33 and the output gear 42, and is output from the output shaft 40 to the cooling fan 140. Here, the bevel pinion 22, the bevel gear 32, the intermediate shaft 30, the intermediate gear 33, and the output gear 42 form a reduction mechanism that reduces a speed of rotation of the input shaft 20 and transmits the rotation to the output shaft 40. However, a specific configuration of the reduction mechanism is not particularly limited as long as the reduction mechanism is accommodated in the casing 50 and reduces the speed of the rotation of the input shaft 20 to transmit the rotation to the output shaft 40. For example, the gear set of the bevel pinion 22 and the bevel gear 32 may be a gear set of a hypoid gear or a worm gear.

In addition, a fan (impeller) 23 is disposed in a tip of a front side portion exposed (protruded) from the casing 50 in the input shaft 20 (omitted in the illustration in Fig. 4). The fan 23 rotates in association with the rotation of the input shaft 20, and blows wind toward the casing 50 located behind.

The casing 50 is an integral cast component (made of cast iron) formed in a substantially rectangular parallelepiped shape that is slightly long in the forward-rearward direction. The casing 50 has a front surface 51, a rear surface 52, an upper surface 53, a lower surface 54, and both right and left side surfaces 55 and 55.

A circular through-hole 51a is formed on the front surface 51 of the casing 50. A shaft support member 56 that pivotally supports the input shaft 20 via a bearing 21 is attached to the through-hole 51a. The shaft support member 56 is formed in a substantially cylindrical shape along the forward-rearward direction, and is fixed to the casing 50 in a state where a rear half portion is inserted into the casing 50 from the through-hole 51a. A front end of the shaft support member 56 has a seal member 25 that seals a gap formed with the input shaft 20.

A through-hole 52a is formed on the rear surface 52 of the casing 50. The through-hole 52a has a wide shape in the rightward-leftward direction, and is formed to have a size through which a gear member of the bevel gear 32 and the output gear 42 can pass. The through-hole 52a is a hole portion for incorporating the bevel gear 32 and the output gear 42 into the casing 50 when assembled. When assembled, the intermediate gear 33 and the output gear 42 are inserted into the casing 50 from the through-hole 52a, and are attached to the intermediate shaft 30 and the output shaft 40 inside the casing 50. The through-hole 52a is closed by a cover member 521.

First bearing holes 53a and 54a for supporting the intermediate shaft 30 and second bearing holes 53b and 54b for supporting the output shaft 40 are formed on the upper surface 53 and the lower surface 54 of the casing 50. The first bearing holes 53a and 54a are coaxially formed to have substantially the same inner diameter, and each of bearings 31 is internally fitted thereto so that the intermediate shaft 30 is pivotally supported via the bearings 31. The second bearing holes 53b and 54b are coaxially formed to have substantially the same inner diameter, and each of bearings 41 is internally fitted thereto so that the output shaft 40 is pivotally supported via the bearings 41. The first bearing hole 54a and the second bearing hole 54b on the lower surface 54 are closed by cover members 541 and 542 at height (depth) positions close to openings thereof. The cover members 541 and 542 preferably have satisfactory thermal conductivity. In the casing 50, portions having the first bearing holes 53a and 54a and the second bearing holes 53b and 54b are all integrally formed of a single material.

The lower surface 54 of the casing 50 is formed to be gradually located downward as the lower surface 54 is oriented rearward from a front end. In the present embodiment, the lower surface 54 of the casing 50 has a front end portion 54c, a middle stage portion 54d, and a rear half portion 54e which are located downward in this stepwise order as the lower surface 54 is oriented rearward.

Out of these portions, a plurality of fins 544 are erected along the forward-rearward direction in the front end portion 54c of the lower surface 54. The plurality of fins 544 guide wind of the fan 23 provided in the input shaft 20 to the second bearing hole 54b formed in the rear half portion 54e of the lower surface 54.

The first bearing hole 54a for supporting the intermediate shaft 30 is open in the middle stage portion 54d of the lower surface 54.

The second bearing hole 54b for supporting the output shaft 40 is open in the rear half portion 54e of the lower surface 54. In addition, the rear half portion 54e of the lower surface 54 has four leg portions 543 fixed to a base 160 (refer to Fig. 1) of an upper portion of the cooling tower 100.

A front half portion of both side surfaces 55 of the casing 50 is formed in a smooth surface shape so that a front end is smoothly connected to the front surface 51 and is gradually located to a lateral side as the front end is oriented toward the rear half portion.

In addition, the rear half portion of the side surface 55 of the casing 50 has a plurality of (two in the present embodiment) groove portions 551 provided along the axial direction (upward-downward direction) of the output shaft 40. The plurality of groove portions 551 are aligned in the forward-rearward direction, and a lower end thereof is connected to the rear half portion 54e of the lower surface 54 of the casing 50 between the two leg portions 543.

The upper surface 53 of the casing 50 is smoothly connected to the front surface 51 in the front end, and is formed in a flat surface shape.

A substantially flat plate-shaped top cover 57 is attached to the upper surface 53 of the casing 50. The top cover 57 exposes the output shaft 40 from the insertion hole 57a located above the first bearing hole 53a, and closes the second bearing hole 53b.

In addition, the top cover 57 closes an oil circulation hole (ejection hole) 53c formed on the upper surface 53 of the casing 50. The oil circulation hole 53c is formed in front of the first bearing hole 53a, and a lubricant wound upward inside the casing 50 is ejected upward of the upper surface 53 by a splasher 24 attached to the input shaft 20. The lubricant is supplied from the upper side of the upper surface 53 to the bearing 31 inside the first bearing hole 53a, and returns to the casing 50.

### [Seal Member]

An annular seal member 58 for sealing a gap between the top cover 57 and the output shaft 40 is provided inside the insertion hole 57a of the top cover 57. The seal member 58 is exposed to the outside of the casing 50 (top cover 57).

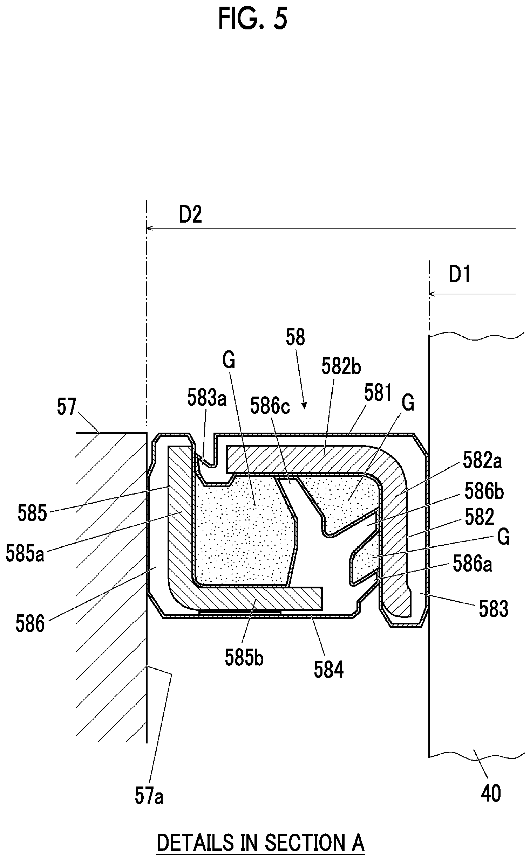

Fig. 5 is an enlarged view of a section A in Fig. 4, and is a view for describing the seal member 58.

As illustrated in the drawing, the seal member 58 has a first member 581 externally fitted to the output shaft 40 and a second member 584 internally fitted to the top cover 57.

The first member 581 has a first core bar 582 which is a main body of the first member 581 and a first elastic body 583 which covers a periphery of the first core bar 582.

The first core bar 582 has a cylindrical portion 582a externally fitted to the output shaft 40 and a flange portion 582b extending outward in a radial direction of the axis of the output shaft 40 from an upper end of the cylindrical portion 582a, and is formed in an L-shape in cross section.

The first elastic body 583 is formed in a shape corresponding to the first core bar 582, and covers the periphery of the first core bar 582. In addition, the first elastic body 583 has a first lip portion 583a provided in a tip of an outer peripheral portion. A tip of the first lip portion 583a is in contact with the second member 584.

The second member 584 has a second core bar 585 which is the main body of the second member 584, and a second elastic body 586 that covers the periphery of the second core bar 585.

The second core bar 585 has a cylindrical portion 585a externally fitted to the insertion hole 57a of the top cover 57 and a flange portion 585b extending inward in the radial direction of the axis of the output shaft 40 from a lower end of the cylindrical portion 585a, and is formed in an L-shape in cross section. The second core bar 585 and the first core bar 582 are combined with each other so that the cylindrical portions 582a and 585a face each other and the flange portions 582b and 585b face each other. The first lip portion 583a of the first member 581 comes into contact with an inner peripheral upper end of the second core bar 585.

The second elastic body 586 has three second lip portions 586a to 586c provided on an inner peripheral portion. Out of the portions, the second lip portion 586a extends slightly upward in an inner diameter direction from the inner peripheral portion of the flange portion 585b of the second core bar 585, and a tip thereof is in contact with an outer peripheral surface of the cylindrical portion 582a of the first core bar 582. The second lip portion 586b extends slightly upward in the inner diameter direction slightly above the second lip portion 586a, and a tip thereof is in contact with the outer peripheral surface of the cylindrical portion 582a of the first core bar 582. The second lip portion 586c extends upward from the inner peripheral portion of the flange portion 585b of the second core bar 585, and a tip thereof is in contact with a lower surface of the flange portion 582b of the first core bar 582. The number and a shape of the second lip portions 586a to 586c are not particularly limited.

A space between the first member 581 and the second member 584, that is, a space between the adjacent second lip portions 586a to 586c or a space between the second lip portion 586c and the first lip portion 583a is filled with a lubricant G.

In addition, in the seal member 58, a ratio of an outer diameter (diameter) D2 to an inner diameter (diameter) D1 is preferably 1.6 or higher, and this ratio more preferably falls within a range of 1.8 to 2.0. When the ratio is set in this way, in order to dispose the seal member 58, it is not necessary to prepare a dedicated cover having a small inner diameter.

### [Operation of Speed Reducer]

Subsequently, an operation of the speed reducer 1 will be described.

In the speed reducer 1, when power of the motor 150 is input to rotate the input shaft 20, the speed of this motion is reduced via the gear set of the bevel pinion 22 and the bevel gear 32, and the motion is transmitted to the intermediate shaft 30. Thereafter, the speed of the motion is further reduced via the gear set of the intermediate gear 33 and the output gear 42, and the motion is transmitted to the output shaft 40. In this way, the speed-reduced power is output from the output shaft 40 to the cooling fan 140, and the cooling fan 140 is rotationally driven.

In this case, in the speed reducer 1, as illustrated in Fig. 5, the gap between the output shaft 40 and the top cover 57 is sealed with the seal member 58.

In the seal member 58, the first member 581 is externally fitted to the output shaft 40, and the second member 584 is internally fitted to the casing 50 (top cover 57) so that the first member 581 and the second member 584 are relatively rotated. Then, the first lip portion 583a of the first member 581 comes into sliding contact with the second core bar 585, and the second lip portions 586a to 586c of the second member 584 come into sliding contact with the first core bar 582. In this manner, an upper side and a lower side of the seal member 58, that is, an upper side and a lower side of the casing 50 (top cover 57) are preferably sealed.

In addition, in this case, the output shaft 40 does not come into sliding contact with any member. In this manner, for example, unlike a case where a lip portion of a seal ring is directly brought into sliding contact with the output shaft 40, it is possible to prevent a sliding contact mark (abrasion mark) from being formed in the output shaft 40.

### [Technical Effects of Present Embodiment]

As described above, according to the present embodiment, the seal member 58 disposed between the output shaft 40 and the casing 50 (top cover 57) has the first member 581 externally fitted to the output shaft 40 and the second member 584 internally fitted to the top cover 57. The first member 581 has the first core bar 582 and the first lip portion 583a provided on the outer periphery of the first core bar 582. The second member 584 has the second core bar 585 with which the first lip portion 583a comes into contact and the second lip portions 586a to 586c provided on the inner periphery of the second core bar 585 to come into contact with the first core bar 582.

In this manner, in the seal member 58, the first lip portion 583a of the first member 581 comes into sliding contact with the second core bar 585, and the second lip portions 586a to 586c of the second member 584 come into sliding contact with the first core bar 582. In this manner, the upper side and the lower side of the seal member 58, that is, the upper side and the lower side of the casing 50 (top cover 57) are preferably sealed.

Therefore, unlike the related art which requires a slinger member, it is possible to seal a gap between the output shaft 40 and the casing 50 with a simple configuration.

Furthermore, the first member 581 externally fitted to the output shaft 40 and the second member 584 internally fitted to the casing 50 (top cover 57) are relatively rotated, and the output shaft 40 does not come into sliding contact with any member. In this manner, for example, unlike a case where the lip portion of the seal ring is directly brought into sliding contact with the output shaft 40, it is possible to prevent a sliding contact mark from being formed in the output shaft 40.

In addition, according to the present embodiment, in the seal member 58, the space between the first member 581 and the second member 584 is filled with the lubricant.

In this manner, a gap between the output shaft 40 and the casing 50 can be more preferably sealed, and moisture can be prevented from entering the inside of the speed reducer 1.

### [Others]

Hitherto, the embodiment of the present invention has been described. However, the present invention is not limited to the above-described embodiment.

For example, in the above-described embodiment, a case has been described where a structure of the seal member according to the present invention is applied to the seal member 58 that seals the gap between the output shaft 40 and the casing 50 (top cover 57). However, the seal member according to the present invention can be widely applied to those which are disposed between the shaft and the casing to seal the gap. For example, the seal member may be applied to the seal member 25 that seals the gap between the input shaft 20 and the casing 50 (shaft support member 56). Here, when applied to the seal member 25, the ratio of the outer diameter (diameter) D2 to the inner diameter (diameter) D1 is preferably 2.0 or higher, and the ratio more preferably falls within a range of 2.2 to 2.5. When the ratio is set in this way, in order to dispose the seal member 25, it is not necessary to prepare a dedicated cover having a small inner diameter.

In addition, in the above-described embodiment, the seal member 58 is disposed between the output shaft 40 and the top cover 57. However, the seal member 58 may be disposed between the output shaft 40 and the casing 50.

In addition, sealing performance may be further improved by sealing the gap between the output shaft 40 and the casing 50 (top cover 57) with the seal member 58 and providing a slinger member (refer to Fig. 6) on the outside thereof.

In addition, a type of the cooling tower according to the present invention is not particularly limited as long as the cooling tower has the cooling fan.

In addition, the cooling tower speed reducer according to the present invention is not limited to a perpendicular type speed reducer as long as the speed reducer has an exposed shaft.

In addition, details in the above-described embodiment can be appropriately modified within the scope not departing from the concept of the invention.

### Brief Description of the Reference Symbols

- 1: cooling tower speed reducer
- 20: input shaft
- 25: seal member
- 40: output shaft
- 50: casing
- 53: upper surface
- 53b: second bearing hole
- 53c: oil circulation hole (ejection hole)
- 57: top cover
- 57a: insertion hole
- 58: seal member
- 581: first member
- 582: first core bar (first member main body)
- 583: first elastic body
- 583a: first lip portion
- 584: second member
- 585: second core bar (second member main body)
- 586: second elastic body
- 586a to 586c: second lip portions
- D1: inner diameter of seal member
- D2: outer diameter of seal member
- G: lubricant
- 100: cooling tower
- 140: cooling fan

## Claims

1. A cooling tower speed reducer (1) that reduces a speed of rotation input from an input shaft (20) to rotationally drive a cooling fan (140) installed inside a cooling tower (100), comprising:
a seal member (25, 58) disposed between a shaft and a casing (50),
wherein the seal member (25, 58) includes a first member (581) externally fitted to the shaft and a second member (584) internally fitted to the casing (50),
the first member (581) includes a first member main body (582) and a first lip portion (583a) provided on an outer periphery of the first member main body (582), and
the second member (584) includes a second member main body (585) with which the first lip portion (583a) comes into contact and second lip portions (586a to 586c) provided on an inner periphery of the second member main body (585) to come into contact with the first member main body (582).

2. The cooling tower speed reducer (1) according to claim 1,
wherein the seal member (25, 58) is exposed to an outside of the casing (50).

3. The cooling tower speed reducer (1) according to claim 1 or 2,
wherein in the seal member (25, 58), a space between the first member (581) and the second member (584) is filled with a lubricant (G).

4. The cooling tower speed reducer (1) according to any one of claims 1 to 3,
wherein the casing (50) includes an ejection hole (53c) for the lubricant (G) and a cover (57) that closes the ejection hole (53c), and
the seal member (25, 58) is disposed between the shaft (40) and the cover (57).

5. The cooling tower speed reducer (1) according to any one of claims 1 to 4,
wherein the shaft is an output shaft (40) that outputs the speed-reduced rotation.

6. The cooling tower speed reducer (1) according to claim 5,
wherein in the seal member (25, 58), a ratio of an outer diameter to an inner diameter is 1.6 or higher.

7. The cooling tower speed reducer (1) according to any one of claims 1 to 6,
wherein the shaft is the input shaft (20), and
in the seal member (25, 58) disposed between the input shaft (20) and the casing (50), a ratio of an outer diameter to an inner diameter is 2.0 or higher.
